# EUROPÄISCHE PATENTSCHRIFT

(11) **EP 2 742 804 B1**
(45) Veröffentlichungstag und Bekanntmachung des Hinweises auf die Patenterteilung: **18.11.2015**
(21) Anmeldenummer: 12197108.9
(22) Anmeldetag: 14.12.2012
(51) Int. Cl.: A22C 11/00, A22C 13/00, A22C 11/02

(54) **Verfahren zum Herstellen eines Nahrungsmittels durch Coextrusion und Verwendung eines Haftmittels als Gleitmittel bei der Coextrusion**
Method for producing a food item by means of coextrusion and use of an adherent as lubricant during coextrusion
Procédé de fabrication d'un aliment par coextrusion et utilisation d'un adhésif comme lubrifiant pendant la coextrusion

(43) Veröffentlichungstag der Anmeldung: 18.06.2014
(73) Patentinhaber: Albert Handtmann Maschinenfabrik GmbH & Co. KG, 88400 Biberach (DE)
(72) Erfinder: Bächtle, Manfred, 88433 Schemmerhofen (DE); Buechele, Armin, 88471 Laupheim (DE); Reutter, Siegfried, 88436 Eberhardzell (DE); Schliesser, Markus, 88489 Wain (DE)
(74) Vertreter: Grünecker Patent- und Rechtsanwälte PartG mbB

(56) Entgegenhaltungen:
- EP-A1- 0 741 973
- WO-A1-2011/087359
- DE-A1- 19 628 232
- FR-A1- 2 886 104
- US-A- 4 469 475
- US-A- 4 949 430

## Beschreibung

Die Erfindung betrifft ein Verfahren zum Herstellen eines Nahrungsmittels durch Coextrusion gemäß dem Oberbegriff des Anspruchs 1, sowie die Verwendung eines Haftmittels bei der Herstellung eines durch Coextrusion hergestellten Nahrungsmittels.

Insbesondere bei der Wurstherstellung werden Coextrusionsprozesse verwendet. Ein entsprechender Coextrusionsprozess ist beispielsweise in der EP 2016830B1 beschrieben. Bei dem Coextrusionsverfahren wird eine pastöse Masse, beispielsweise Wurstbrät, mit einem Gel ummantelt, welches mit Hilfe einer Fixierlösung aushärtet. Der so erzeugte Wurststrang wird im Anschluss an den Coextrusionsprozess abgedreht oder abgeteilt.

Bei den coextrudierten Nahrungsmitteln kommt es immer wieder vor, dass sich die coextrudierte Hülle, d.h. Wursthülle vom Füllgut ablöst, insbesondere dann, wenn die entsprechenden Nahrungsmittel im warmen Wasser erhitzt werden. Solche Produkte werden von den Verbrauchern nicht akzeptiert.

Das Problem tritt insbesondere dann auf, wenn ein Verfahren verwendet wird, bei dem die Hülle auf ein Füllrohr extrudiert wird und eine Strecke in Richtung Füllrohrende bewegt wird, um auf dem Füllrohr auszuhärten. Die pastöse Masse wird dann durch das Füllrohr in die Hülle ausgestoßen. Um den Gleitwert zwischen Füllrohr und zu erzeugender Hülle zu minimieren, wird zwischen Füllrohr und extrudierter Hülle ein Gleitmittel, z.B. normales Leitungswasser, zugeführt.

Das Gleitmittel gelangt dann auch zwischen die Hülle und das pastöse Füllgut. Dieses Gleitmittel kann sich negativ auf die Haftung zwischen Hülle und Füllgut auswirken.

Hiervon ausgehend liegt der vorliegenden Erfindung die Aufgabe zugrunde, ein Coextrusionsverfahren für ein Nahrungsmittel bereitzustellen, das verhindert, dass sich die Hülle vom Füllgut ablöst, insbesondere wenn das coextrudierte Nahrungsmittel im Wasser erhitzt wird.

Erfindungsgemäß wird diese Aufgabe durch die Merkmale der Ansprüche 1 und 11 gelöst.

Dadurch, dass ein Haftmittel direkt zwischen pastöser Masse und coextrudierter Hülle eingebracht wird, kommt es zu einer verbesserten Haftung zwischen pastöser Masse und Hülle, so dass sich die Hülle nicht bei der weiteren Verarbeitung von der pastösen Masse ablöst. Vorteilhaft bei der Zuführung des Haftmittels zwischen pastöser Masse und Hülle ist, dass das Haftmittel direkt an einer Stelle zugeführt wird, wo es auch wirken soll. Somit sind insgesamt geringere Mengen nötig als wenn ein entsprechender Stoff, z.B. der pastösen Masse oder der Hülle, beigemengt wird. Das Haftmittel wird vor dem Verfestigen der Hülle zugeführt.

Unter Haftmittel versteht man beispielsweise ein Mittel, das die Bindung zwischen Hülle und pastöser Masse erhöht oder z.B. die Anzahl der Proteinverbindungen bzw. -vernetzungen, insbesondere zwischen Hülle und pastöser Masse erhöht.

Das erfindungsgemäße Verfahren ist anwendbar, wenn die Hülle direkt auf die pastöse Masse extrudiert wird. Dabei dient dann das Haftmittel dazu, dass die Hülle besser auf der pastösen Masse haftet.

Das erfindungsgemäße Verfahren ist besonders vorteilhaft, weil die Hülle, insbesondere Wursthülle auf ein Füllrohr extrudiert wird und eine Strecke in Richtung Füllrohrende bewegt wird, wobei das Haftmittel als Gleitmittel zwischen Hülle und Füllrohr eingebracht wird und die pastöse Masse durch das Füllrohr in die Hülle ausgestoßen wird. Dadurch hat das eingebrachte Mittel zwei Funktionen, nämlich eine verbesserte Gleitfähigkeit der extrudierten Hülle auf dem Füllrohr zu realisieren, und für eine verbesserte Haftung zwischen pastöser Masse und coextrudierter Hülle zu sorgen.

Vorteilhafterweise ist das Haftmittel flüssig. Wenn das Haftmittel flüssig ist, ist es als Gleitmittel geeignet und darüber hinaus sind der Flüssigkeit dann Zusatzstoffe für eine verbesserte Haftung zugesetzt.

Ganz besonders geeignet ist Wasser als Grundlage für das Haftmittel , dem dann noch entsprechende Zusatzstoffe für eine verbesserte Haftung zugesetzt werden, wobei als Grundlage bzw. Hauptbestandteil eine Menge ≧ 80 Gew.-% Wasser bezogen auf das fertige Haftmittel verstanden wird. Wasser ist kostengünstig, unbedenklich und verzehrbar. Außerdem weist es sehr gute Gleiteigenschaften zwischen Füllmaterial und coextrudierter Hülle auf. Ganz besonders vorteilhaft ist destilliertes Wasser, da bei Verwendung von destilliertem Wasser Leitungen und Spalte etc. nicht verkalken.

Gemäß einer besonders bevorzugten Ausführungsform umfasst das Haftmittel mindestens ein-Protein. Unter mindestens einem Protein versteht man entweder eine bestimmte Art von Protein oder aber auch mehrere unterschiedliche Arten von Proteinen. Unter dem Ausdruck Protein versteht man insbesondere Eiweiße mit mindesten etwa 100 Monomereinheiten oder Polypeptide mit bis zu etwa 100 Monomereinheiten. Wenn alle drei "Schichten", d.h. pastöse Masse, Hülle und Haftmittel, Proteine enthalten, so kann es zu einer Vernetzung zwischen den drei Schichten kommen derart, dass eine gute Haftung zwischen Masse und Hülle gewährleistet ist. In den drei Schichten können gleiche oder verschiedene Proteine verwendet werden. Besonders vorteilhaft ist es, wenn das Haftmittel eine proteinartige Flüssigkeit ist (insbesondere Wasser, dem als Zusatzstoff mindestens ein Protein zugeführt wurden) und die Proteinkonzentration vorzugsweise in einem Bereich von 3 bis 30 Gew.-%, insbesondere 5 bis 20 Gew.-% (Gew.-% in Bezug auf die Gesamtmenge bzw. das fertige Haftmitttel) liegt. Bei weniger als 3 % ist die Verbesserung der Hafteigenschaften nicht ausreichend - da es zu keiner ausreichenden zusätzlichen Vernetzung kommt. Bei einer zu hohen Proteinkonzentration ist das Haftmittel nicht mehr als Gleitmittel geeignet. Ein Bereich von 3 bis 30 %, insbesondere 5 bis 20 Gew.-% hat sich als vorteilhaft herausgestellt.

Wenn alle drei "Schichten" mindestens ein Protein enthalten und das coextrudierte Nahrungsmittel thermisch behandelt wird, können die Proteine gemeinsam koagulieren. Dies kann z.B. bei der Brühwurstherstellung der Fall sein. Dies ermöglicht eine besonders gute Haftung der Hülle auf der pastösen Masse. Die Hülle weist z.B. 1 bis 10 Gew.-% an Protein auf.

Gemäß einer besonders vorteilhaften Ausführungsform umfasst das Haftmittel mindestens ein Enzym, das die Quervernetzung innerhalb von und zwischen Proteinen herstellen kann. Mindestens ein Enzym bedeutet ein bestimmtes Enzym oder unterschiedliche Enzyme bzw. Enzymarten. Ganz besonders geeignet ist dabei beispielsweise Transglutaminase. Enthält also das Haftmittel entsprechende Enzyme, kann die Reaktion zwischen den Proteinen der Hülle und der pastösen Masse forciert werden. Die Enzymkonzentration liegt dabei z.B. etwa in einem Bereich von maximal 5 Gew.-% des fertigen Haftmittels.

Gemäß einem bevorzugten Ausführungsbeispiel weist die Hülle ein Hydrokolloid auf. Beispiele für erfindungsgemäß einsetzbare Hydrokolloide umfassen insbesondere Polysaccharide, wie Alginate, Caragene, Stärke und Pektine - insbesondere mindestens ein Polysaccharid, z.B. Alginat. Hydrikolloide umfassen also Stoffe, die in Wasser als Kolloid in Lösung gehen und ein hohes Vermögen zur Gelbildung haben. Mindestens ein Hydrokolloid bzw. mindestens ein Polysaccharid bedeutet entweder ein bestimmtes Hydrokolloid oder Polysacccharid oder jeweils mehrere unterschiedliche Arten. Eine entsprechende gelförmige Hülle härtet sehr schnell aus. Dem mindestens einem Hydrokolloid, insbesondere Polysaccharid kann dann, wie zuvor beschrieben, Protein zugesetzt werden. Eine solche Hülle eignet sich ganz besonders gut für die vorliegende Erfindung, bei der die Proteinverbindungen begünstigt werden sollen.

Gemäß einem weiteren Ausführungsbeispiel umfasst auch das Haftmittel mindestens ein Hydrokolloid, insbesondere mindestens ein Polysaccharid, (jeweils dann ebenfalls bevorzugt in Gelform) insbesondere in einer Konzentration von 0,2 bis 5 Gew.-% (bezogen auf das fertige Haftmittel). Eine zu niedrige Konzentration reicht nicht für eine Verbesserung der Bindung aus. Bei zu hohen Konzentrationen ergibt sich das Problem, dass das Haftmittel aus Viskositätsgründen nicht mehr als Gleitmittel geeignet ist. Wird dem Hauptbestandteil des Haftmittels z.B. dem Wasser, insbesondere destilliertem Wasser, mindestens ein Hydrokolloid, insbesondere mindestens ein Polysaccharid, als Zusatzstoff zugesetzt, so hat sich gezeigt, dass dies ebenfalls die Haftung zwischen Hülle ,und pastöser Masse begünstigen kann.

Es ist vorteilhaft, wenn so viel Haftmittel zwischen pastöser Masse und coextrudierter Hülle zugeführt wird, dass bei der Herstellung die Querschnittsringfläche des Haftmittels 0,1 bis 2 %, insbesondere 0,5 bis 1,5 % der Querschnittsfläche der ausgestoßenen pastösen Masse beträgt.

Diese Menge eignet sich sehr gut, um die Gleitfähigkeit der coextrudierten Hülle auf dem Füllrohr zu verbessern und gleichzeitig noch ein gutes Haften zwischen pastöser Masse und coextrudierter Hülle zu ermöglichen.

Gemäß der vorliegenden Erfindung wird also das Haftmittel als Gleitmittel verwendet. Somit erfüllt das zugeführte Mittel zwei Funktionen. Das Haftmittel umfasst dabei als Hauptbestandteil Wasser, insbesondere destilliertes Wasser, dem entweder mindestens ein Protein und/oder mindestens ein Hydrokolloid, insbesondere mindestens ein Polysaccharid und/oder mindestens ein Enzym, insbesondere Transglutaminase zugesetzt wurde.

Bei dem erfindungsgemäßen Verfahren wird vorteilhafterweise die Menge an zugeführten Haftmittel in Abhängigkeit des Durchmessers der extrudierten pastösen Masse eingestellt.

Die Viskosität des verwendeten Haftmittels beträgt vorzugsweise ≦ 20 mPas bei einer Temperatur von 15°C.

Die vorliegende Erfindung wird nachfolgend unter Bezugnahme der folgenden Figuren näher erläutert.
- Fig. 1: zeigt einen Schnitt durch einen Coextrusionskopf gemäß einem ersten Ausführungsbeispiel der vorliegenden Erfindung.
- Fig. 2: zeigt einen Schnitt durch ein weiteres Ausführungsbeispiel eines Coextrusionskopfes gemäß der vorliegenden Erfindung.
- Fig. 3: zeigt grob schematisch einen Längsschnitt durch ein coextrudiertes Lebensmittelprodukt gemäß einer ersten Ausführungsform der vorliegenden Erfindung.
- Fig. 4: zeigt grob schematisch einen Längsschnitt durch ein coextrudiertes Lebensmittelprodukt gemäß einem zweiten Ausführungsform der vorliegenden Erfindung.

- Fig. 5: zeigt grob schematisch einen durch ein coextrudiertes Lebensmittelprodukt gemäß einem dritten Ausführungsform der vorliegenden Erfindung.
- Fig. 6: zeigt grob schematisch einen Querschnitt durch ein coextrudiertes Nahrungsmittelprodukt.
- Fig. 7: zeigt eine Füllmaschine für das erfindungsgemäße Verfahren in schematischer Darstellung.

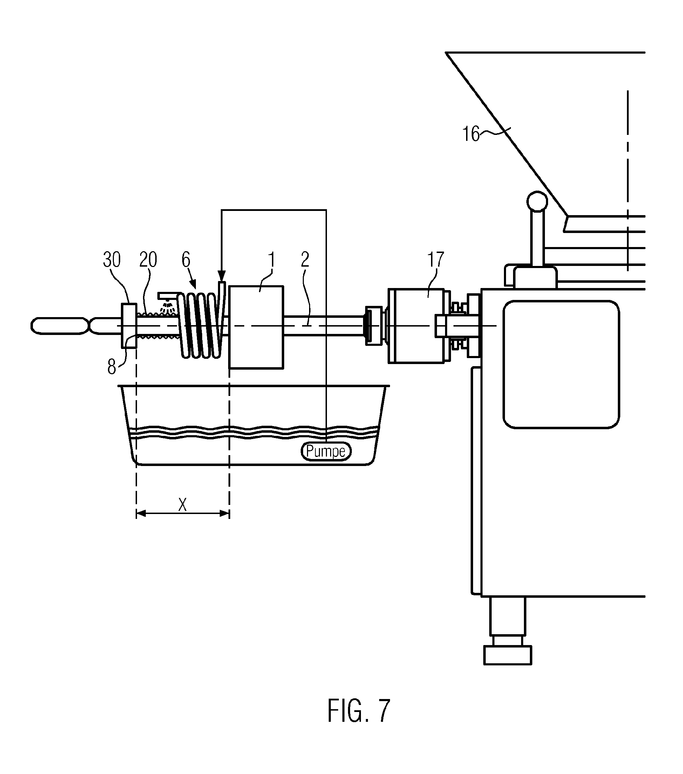

Wie aus Fig. 7 hervorgeht, umfasst eine Füllmaschine bekannterweise einen Trichter 16, über welchen eine pastöse Masse, wie beispielsweise Wurstbrät, zu einem unter dem Trichter angeordneten Förderwerk geführt wird. Das Förderwerk bringt die pastöse Masse unter Druck in ein Füllrohr 2, so dass es in eine Hülle zur Erzeugung von Würsten geschoben wird. Mit Hilfe des Coextrusionskopfes 1 kann weiter die Hülle 20 für die Würste erzeugt werden. Zum Verfestigen der Hülle ist ferner eine Einrichtung 6 zum Zuführen von Fixierlösung für die ausgestoßene Hülle vorgesehen. Hier ist die Einrichtung als Ringdusche 6 ausgebildet, durch die die zu verfestigende Hülle auf dem Füllrohr hindurchgeführt wird. Die Ringdusche ist mit einer Zufuhr für eine Fixierlösung verbunden, die mittels einer Pumpe aus einem weiteren Vorratsbehälter der Ringdusche zugeführt wird.

Nach dem Füllrohrende 8 können unterschiedliche Einrichtungen 30 nachgeordnet werden, wie schematisch in Fig. 7 dargestellt ist. Beispielsweise kann hier eine Abteileinrichtung vorgesehen sein, die den erzeugten Wurststrang abteilt, wenn er beispielsweise mit Hilfe des Antriebs 17 um seine Längsachse verdreht wird. Eine Abteileinrichtung, die beispielsweise die pastöse Masse des Wurststrangs durch Verdrängerelemente in Einzelwürste abteilt und/oder eine Fördereinrichtung, die den erzeugten Wurststrang bzw. die Einzelwürste in Transportrichtung T weiterfördert, kann ebenfalls hinter dem Füllrohr angeordnet sein. Auf diese unterschiedlichen Einrichtungen soll jedoch hier nicht weiter eingegangen werden.

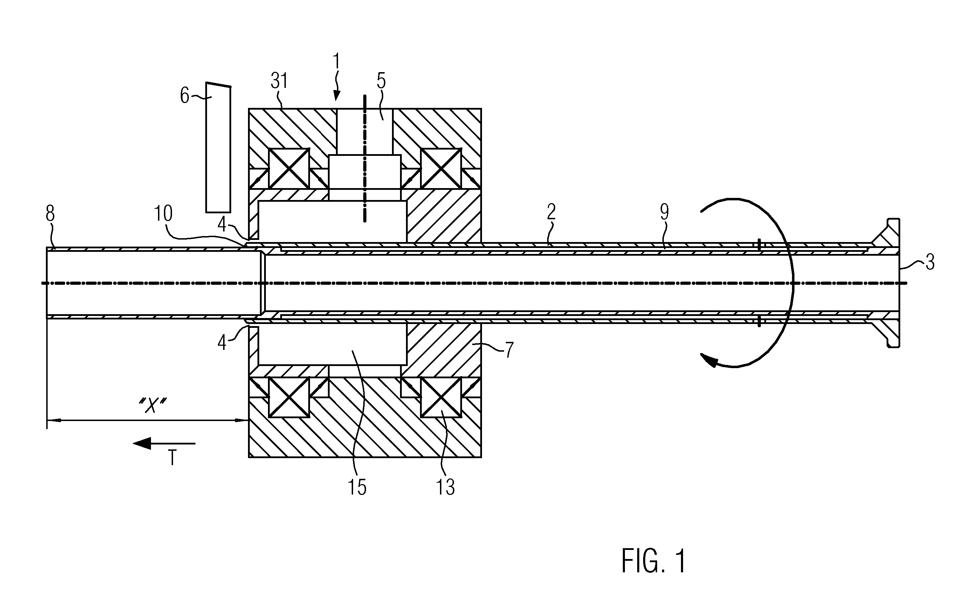

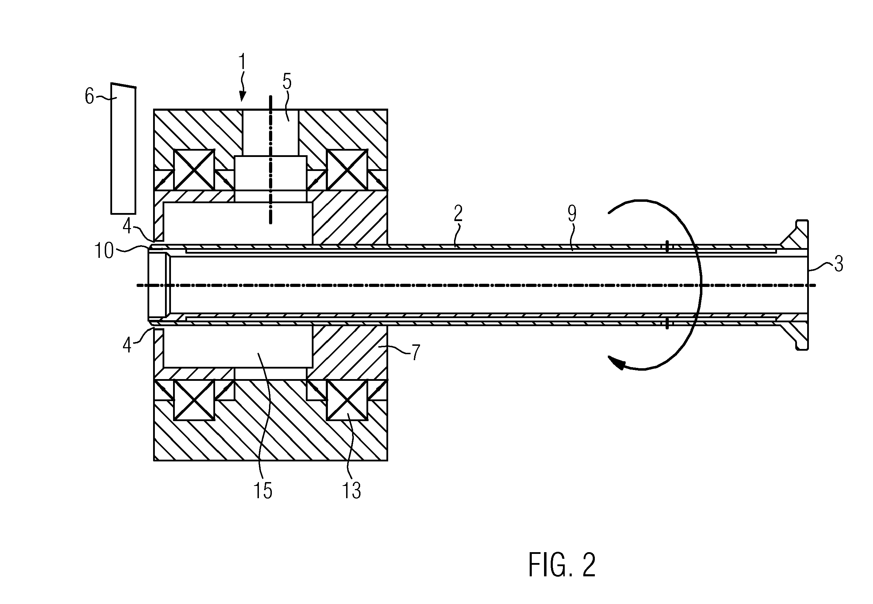

Fig. 1 zeigt einen Schnitt durch einen Coextrusionskopf 1 geeignet für ein erstes Ausführungsbeispiel gemäß der vorliegenden Erfindung. Wie aus Fig. 1 hervorgeht, umfasst der Coextrusionskopf 1 ein Gehäuse 31, in dem die Extrudierdüse 7 zum Ausstoß von Hülle über entsprechende Lager 13 drehbar gelagert ist. Das Gehäuse 31 weist eine Zufuhr 5 für Hüllenmaterialmasse auf. Die Extrudierdüse 7 umfasst einen Düsenhohlraum 15, über den das Hüllenmaterial über den Ringspalt 4 auf das Füllrohr 2 extrudiert werden kann. Das Füllrohr 2 erstreckt sich durch die Extrudierdüse 7. Das Füllrohr 2 ist zusammen mit der Extrudierdüse um die Längsachse des Füllrohrs, wie durch den Pfeil in Fig. 2 dargestellt ist, drehbar gelagert und kann für eine Abdrehvorgang zum Abteilen eines erzeugten Wurststrangs, gedreht werden. Der Coextrusionskopf 1 weist hier ein über den Ringspalt 4 verlängertes Füllrohr 2 auf. Das Füllrohr 2 steht eine Strecke X über den Ringspalt hervor. Die Strecke X ist vorzugsweise 10 bis 200 mm lang, kann jedoch auch länger gewählt werden. Somit kann die Hülle durch den Ringspalt 4 auf das Füllrohr 2 extrudiert werden, wobei sich die Hülle auf der Strecke X verfestigen kann. Die extrudierte Hülle bewegt sich dabei in Richtung Füllrohrende 8 in Transportrichtung T. Zum Aushärten ist hier eine Einrichtung zum Zuführen von Fixierlösung 6 vorgesehen, die vorzugsweise um das Füllrohr, wie in Fig. 7 dargestellt ist, angeordnet ist und die Fixierlösung auf das ausgestoßene Hüllenmaterial von außen aufbringt. Somit kann die Hülle, die beispielsweise aus einem Polysaccharidgel (z.B. Alginatgel) gebildet ist, durch Aufbringen einer Fixierlösung, z.B. Calciumchloridlösung, verfestigt werden. Am Ende 8 des Füllrohrs ist das ausgestoßene Hüllenmaterial ausreichend verfestigt und kann nachfolgenden Verarbeitungsschritten zugeführt werden. Die pastöse Masse kann über die Zufuhr 3 dem Füllrohr unter Druck zugeführt werden und in die Hülle ausgestoßen werden. Dabei wird die pastöse Masse in die Hülle geschoben, wodurch die Hülle 20 vom Füllrohr abgezogen wird, so dass sich die Hülle bzw. das ausgestoßene Hüllenmaterial in Transportrichtung T bewegt. Damit sich das ausgestoßene Hüllenmaterial bzw. die Hülle gut in Transportrichtung T bewegen lässt, ist es vorteilhaft, wenn das Füllrohr im Außenbereich gute Gleiteigenschaften aufweist. Vorzugsweise ist die Oberfläche des Füllrohrs zumindest im Bereich der Strecke X so ausgebildet, dass sie einen GleitreibungskoeffiGleitreibungskoeffizienten µ in einem Bereich von 0,01 bis 0,1 aufweist.

Gemäß der vorliegenden Erfindung wird jedoch, wie aus Fig. 1 hervorgeht, der Gleitwert zwischen dem Füllrohr und der ausgestoßenen Hülle weiter minimiert, indem ein Haftmittel, das auch als Gleitmittel dient, zwischen Füllrohr 2 und extrudierter Hülle eingeführt wird. Dazu ist eine Gleitmitteleinrichtung vorgesehen, die eine Zufuhr 9 für das Haftmittel bzw. Gleitmittel 23 aufweist. Die Zufuhr 9 ist hier als Kanal im Füllrohr 2 ausgebildet. Insbesondere verläuft hier der Kanal ringförmig in der Füllrohrwandung. Im Bereich des Ringspaltes 4 ist ein weiterer Ringspalt 10 um die Außenfläche des Füllrohrs 2 angeordnet. Dazu weist das Füllrohr 2 im Bereich hinter dem weiteren Ringspalt 10 einen kleineren Durchmesser auf als das Füllrohr 2 in einem Bereich vor dem Ringspalt 10. Über den Ringspalt 10 kann eine Inneneinspritzung des Haft- bzw. Gleitmittels 23 zwischen dem ausgestoßenen Hüllenmaterial und der Oberfläche des Füllrohrs 2 erfolgen. Somit kann das ausgestoßene Hüllenmaterial bzw. die zu erzeugende Hülle gut auf dem Füllrohr 2 in Richtung Füllrohrende 8 gleiten. Das Einspritzen des Gleitmittels dient also als Hilfsmittel zur Verringerung des Reibungskoeffizienten an der Oberfläche des Füllrohrs. Zu diesem Zweck können auch im Verlauf der Strecke X zusätzliche Öffnungen angeordnet sein, durch die zusätzlich Haft- bzw. Gleitmittel eingespritzt werden kann, damit im Laufe der Strecke X der Gleitfilm nicht abreißen kann. Die Einrichtung zum Zuführen des Haftmittels bzw. des Gleitmittels umfasst weiter eine nicht dargestellte Einrichtung zum Einstellen der zugeführten Haftmittelmenge, z.B. eine Regelpumpe in einer Zuführleitung, so dass die zugeführte Haftmittelmenge pro Zeit und somit auch die Dicke des aufgebrachten Gleitfilms eingestellt werden kann.

Das Haft- bzw. Gleitmittel wird dann bei Ausstoß der pastösen Masse durch das Füllrohr 2 in die Hülle 20 auch zwischen die Hülle 20 und die pastöse Masse 22 eingebracht.

Dadurch, dass das Haftmittel nun zwischen pastöser Masse 22 und Hülle 20 vorgesehen ist, kommt es zu einer verbesserten Haftung zwischen pastöser Masse und Hülle derart, dass sich die Hülle nicht von der pastösen Masse ablöst, insbesondere dann, wenn das hergestellte Lebensmittelprodukt, beispielsweise in warmem Wasser erhitzt wird. Dadurch, dass das Haftmittel direkt zwischen pastöser Masse und coextrudierter Hülle eingebracht wird, wird es direkt an der Stelle zugeführt, wo es auch wirken soll. Somit werden geringere Mengen an Haftmittel benötigt als wenn der Stoff beispielsweise der pastösen Masse zugeführt werden würde. Das Haftmittel hat somit zwei Funktionen, nämlich die der Verbesserung der Haftung zwischen pastöser Masse und coextrudierter Hülle und zweitens noch die Funktion als Gleitmittel. In seiner Funktion als Gleitmittel sollte das Haftmittel eine Viskosität <=20 mPas bei Temperaturen von 15° C aufweisen.

Genauso gut ist das Verfahren jedoch geeignet, wenn die Hülle, wie insbesondere aus Fig. 2 hervorgeht, direkt auf die ausgestoßene pastöse Masse aufgebracht wird. Das in Fig. 2 gezeigte Ausführungsbeispiel entspricht dem in Fig. 1 gezeigten Ausführungsbeispiel, wobei hier jedoch die Hülle direkt über den Ringspalt 4 auf die pastöse Masse aufgebracht wird. In gleicher Weise wie im Zusammenhang mit Fig. 1 beschrieben, wird hier über den Kanal 9 und den Ringspalt 10 das Haftmittel 23 ausgestoßen, hier jedoch direkt auf die ausgestoßene pastöse Masse und unterhalb der ausgestoßenen Hülle 20. Hier hat das Haftmittel nicht die Funktion eines Gleitmittels sondern lediglich die Funktion des Haftmittels.

Im Zusammenhang mit den Fig. 1 bis 3 wird nun ein erstes Ausführungsbeispiel gemäß der vorliegenden Erfindung näher erläutert.

Bei dem ersten Ausführungsbeispiel wird als Material für die Hülle 20 ein Gel aus einem Polysacharid-Protein-Gemisch, z.B. ein Alginat-Protein-Gel, verwendet. Das Gel umfasst dabei also mindestes ein Polysaccharid und mindestens ein Protein. Ein entsprechendes Gel härtet sehr schnell aus, während sich das Protein im Gel mit Proteinen des Haftmittels 23 verbinden kann. Das Polysacharid-Protein-Gemisch hat beispielsweise einen Proteinanteil von 1 bis 10 Gew.-% (In Bezug auf die Gesamtmenge, d.h. das fertige Hüllenmaterial). Ein Beispiel für eine Zusammensetzung ist beispielsweise:
5 Gew.-% Alginat, 1% Guar, 4 Gew.-% Protein, geringe Bestandteile Konservierungsstoffe,< 2 Gew.-% mindestens eines weiteren Polysaccharids (hier z.B. Pektin) und Wasser (restliche annähernd 90 Gew.-%).

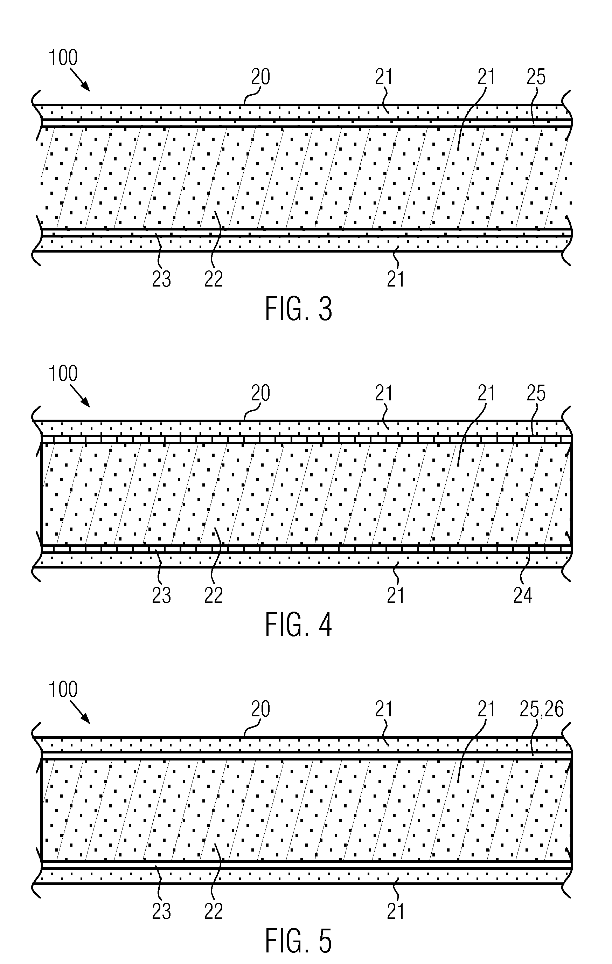

Auch das Haftmittel 23 umfasst hier, wie aus Fig. 3 hervorgeht, mindestens ein Protein 21. Das Haftmittel ist flüssig und dient gleichzeitig als Gleitmittel im Falle des Ausführungsbeispiels, das in Fig. 1 gezeigt ist. Insbesondere weist das Haftmittel gemäß einer bevorzugten Ausführungsform als Hauptbestandteil 25 z.B. Wasser (>= 80 Gew.-% des fertigen Haftmittels), insbesondere destilliertes Wasser, auf. Dem Wasser wird als Zusatzstoff mindestens ein Protein 21 zugesetzt. Das Haftmittel kann noch weitere Zusätze umfassen. Die Proteinkonzentration in dem fertigen Haftmittel liegt in einem Bereich von 3 bis 30 Gew.-%, insbesondere 5 bis 20 %. Bei höheren Proteinkonzentrationen wäre keine ausreichende Gleiteigenschaft der Hülle auf dem Füllrohr mehr gegeben. Bei zu geringen Proteinanteilen wäre die Verbesserung der Haftung nicht ausreichend.

Als Proteine für die Hülle 20 und das Haftmittel 23 kommen beispielsweise Proteine, die aus folgenden Quellen gewonnen werden oder in dieser Form zugesetzt werden in Betracht: Hühnereieiweiß, Blutplasma, Weizeneiweiß oder auch Mischungen daraus.

Auch die pastöse Masse umfasst gemäß diesem Verfahren Proteine, wobei die Proteinkonzentration mindestens 5 bis 30 Gew.-% beträgt. Im Falle von Fleisch- und Wurstwaren umfasst die pastöse Masse sowieso Proteine, beispielsweise in Form von Muskelproteinen bzw. collagenen Proteinen, die sich dann mit den Proteinen des Haftmittels 23 verbinden können.

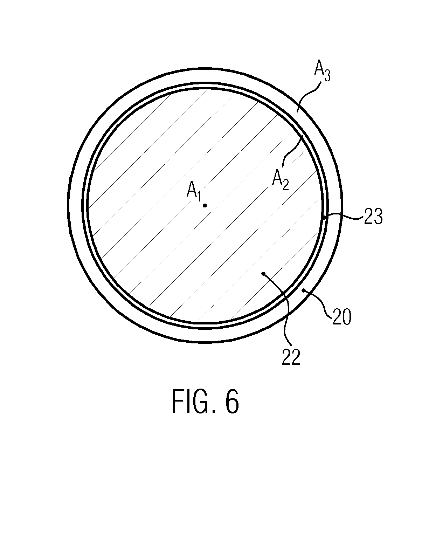

Wie insbesondere aus Fig. 6 hervorgeht, wird die Menge an zugeführtem Haftmittel in Abhängigkeit des Durchmessers der extrudierten pastösen Masse 22 eingestellt, z.B. über die zuvor erläuterte Einstelleinrichtung. Die Querschnittsringfläche A2 des Haftmittels 23 beträgt 0,1 bis 2 %, insbesondere 0,5 bis 1,5 % der Querschnittsfläche A1 der ausgestoßenen pastösen Masse. Die Querschnittsringfläche A3 der Hülle kann 2 bis 8 % der Querschnittsfläche der ausgestoßenen pastösen Masse betragen.

Bei einem konkreten Beispiel gemäß der ersten Ausführungsform unter Verwendung eines Füllsystems von Handtmann, z. B. Typ KVLSH 162 wurden folgende Materialien verwendet. Hüllenmaterial:
5 Gew.-% Alginat, 1% Guar, 4 Gew.-% Protein, geringe Bestandteile Konservierungsstoffe, < 2% Pektin und Wasser (restliche annähernd 90 Gew.-%).

### Haftmittel:

Destilliertes Wasser: 78 Gew.-%,
Proteine (Hühnereieiweiß) 12 Gew.- %,

### Pastöse Masse:

Brühwurstbrät
Durchmesser der extrudierten Masse = 20 mm.
Fixierlösung = 20 % CaCl-Lösung
Hüllenmaterialstärke = 0,25 mm
Ausstoßrate der pastösen Masse= 460 kg/h, Ausstoßrate der Hülle= 23 kg/h, Ausstoßrate des Haftmittels = 3,6 kg/h.

Die Verbindung zwischen Hülle 20 und pastöser Masse 22 kann noch weiter begünstigt werden, wenn das coextrudierte Produkt nach dem Aushärten der Hülle 20 thermisch behandelt wird, z.B. bis zu 15 Minuten auf bis zu 70 °C erwärmt wird. Dies kann z.B. bei der Brühwurstherstellung der Fall sein. Dann können die Proteine der pastösen Masse und des Haftmittels sowie auch die Proteine des Haftmittels und die Proteine der Hülle gemeinsam koagulieren, was zu einer besonders festen Verbindung führt.

Das im Zusammenhang mit Fig. 4 gezeigte Ausführungsbeispiel entspricht im Wesentlichen dem ersten Ausführungsbeispiel, mit der Ausnahme der Zusammensetzung des Haftmittels 23. Hier umfasst das Haftmittel 23 mindestens ein Enzym 24, das die Quervernetzung zwischen Proteinen in der Hülle und der pastösen Masse herstellt. Hier ist insbesondere Transglutaminase (Protein-Glutamin-γ-glutamyltransferase) geeignet. Der Enzymanteil im Haftmittel beträgt max. 5 Gew.-% des fertigen Haftmittels. Vorteilhafterweise ist der Hauptbestandteil auch hier Wasser, insbesondere destilliertes Wasser. Durch das Haftmittel 23 kann eine Vernetzung zwischen den Proteinen 21 in der Hülle 20 und in Proteinen 21 der pastösen Masse 22 forciert werden. Somit ist eine gute Haftung zwischen pastöser Masse 22 und Hülle 20 gewährleistet und gleichzeitig kann das Haftmittel 23 auch gut als Gleitmittel im Falle einer Ausführungsform, wie sie in Fig. 1 gezeigt ist, verwendet werden. Bei dieser Ausführungsform sollten zumindest die Hülle und die pastöse Masse mindestens ein Protein umfassen.

Auch das in Fig. 5 gezeigte Ausführungsbeispiel entspricht dem im Detail beschriebenen Ausführungsbeispiel der Fig. 3 mit der Ausnahme der Zusammensetzung des Haftmittels 23. In diesem Ausführungsbeispiel umfasst das Haftmittel mindestens ein Hydrokolloid, insbesondere mindestens ein Polysacharid 26, z.B. Alginat, jeweils vorzugsweise in Gelform. Das Haftmittel 23 weist auch hier vorteilhafterweise als Hauptbestandteil Wasser, insbesondere destilliertes Wasser auf, wobei das fertige Haftmittel 0,2 bis 5 Gew.-% Polysacharid, z.B. Alginat, aufweist. Auch in diesem Fall wird die Bindung zwischen Hülle 20 und Masse 22 verbessert. Als Hydrokolloid kommt hier für das Haftmittel insbesondere mindestens ein Polysaccharid in Frage, insbesondere z.B. in Form von Stärke, Pektin oder Alginat.

Die im Zusammenhang mit den Fig. 3 und 4 gezeigten Ausführungsbeispiele haben gemeinsam, dass sie die Haftung aufgrund einer Erhöhung der Anzahl der Proteinverbindungen verbessern. Das im Zusammenhang mit Fig. 5 gezeigte Ausführungsbeispiel begünstigt die Haftung aufgrund einer verbesserten Vernetzung. Es ist auch möglich ein Haftmittel zu verwenden, in dem zumindest zwei der in gezeigten Ausführungsbeispielen zugesetzten Zusätze kombiniert werden.

## Patentansprüche

1. Verfahren zum Herstellen eines durch Coextrusion hergestellten Nahrungsmittels (100), insbesondere von Würsten mit folgenden Schritten:
- Extrudieren pastöser Masse (22),
- Coextrudieren einer Hülle (20),
Zuführen von Haftmittel (23) zwischen pastöser Masse und coextrudierter Hülle (20), **dadurch gekennzeichnet, dass** die Hülle (20) auf ein Füllrohr (2) extrudiert wird und eine Strecke in Richtung Füllrohrende bewegt wird, wobei das Haftmittel (23) als Gleitmittel zwischen Hülle und Füllrohr (2) eingebracht wird, und die pastöse Masse (22) durch das Füllrohr (2) in die Hülle ausgestoßen wird.

2. Verfahren nach Anspruch 1, **dadurch gekennzeichnet, dass** das Haftmittel (23) flüssig ist.

3. Verfahren nach mindestens einem der Ansprüche 1 bis 2, **dadurch gekennzeichnet, dass** das Haftmittel (23) Wasser, insbesondere destilliertes Wasser umfasst.

4. Verfahren nach mindestens einem der Ansprüche 1 bis 3, **dadurch gekennzeichnet, dass** das Haftmittel (23), die Hülle (20) und die pastöse Masse (22) jeweils mindestens ein Protein (21) umfassen.

5. Verfahren nach mindestens einem der Ansprüche 1 bis 4, **dadurch gekennzeichnet, dass** das Haftmittel (23) eine proteinhaltige Flüssigkeit ist und die Proteinkonzentration vorzugsweise in einem Bereich von 3 bis 30 Gew.-%, insbesondere 5 bis 20 Gew.-% liegt.

6. Verfahren nach mindestens Anspruch 4, **dadurch gekennzeichnet, dass** das coextrudierte Nahrungsmittel (100) thermisch behandelt wird.

7. Verfahren nach mindestens einem der Ansprüche 1 bis 6, **dadurch gekennzeichnet, dass** das Haftmittel (23) mindest ein Enzym (24), insbesondere Transglutaminase umfasst.

8. Verfahren nach mindestens einem der Ansprüche 1 bis 6, **dadurch gekennzeichnet, dass** die Hülle (20) mindestens ein Hydrokolloid, insbesondere mindestens ein Polysaccharid umfasst.

9. Verfahren nach Anspruch 8, **dadurch gekennzeichnet, dass** das Haftmittel (23) ebenfalls ein mindestens ein Hydrokolloid, insbesondere mindestens ein Polysaccharid umfasst, insbesondere in einer Konzentration von 0,2 bis 5 Gew.-%.

10. Verfahren nach mindestens einem der Ansprüche 1 bis 9, **dadurch gekennzeichnet, dass** die Querschnittsringfläche (23) des Haftmittels 0,1 % bis 2 %, insbesondere 0,5% bis 1,5 % der Querschnittsfläche der ausgestoßenen pastösen Masse beträgt.

11. Verwendung eines Haftmittels bei der Herstellung eines durch Coextrusion hergestellten Nahrungsmittels, wobei pastöse Masse ausgestoßen wird, eine Hülle coextrudiert wird und Haftmittel zwischen pastöser Masse und coextrudierter Hülle zugeführt wird, **dadurch gekennzeichnet, dass** die pastöse Masse aus einem Füllrohr ausgestoßen wird und die Hülle auf das Füllrohr extrudiert wird, und eine Strecke in Richtung Füllrohrende bewegt wird, und dass das Haftmittel als Gleitmittel verwendet wird.

12. Verwendung eines Haftmittels nach Anspruch 11, **dadurch gekennzeichnet, dass** das Haftmittel als Hauptbestandteil Wasser, insbesondere destilliertes Wasser umfasst, dem entweder
- mindestens ein Proteine und/oder
- mindestens ein Hydrokolloid, insbesondere mindestens ein Polysaccharid, und/oder
- mindestens ein Enzyme, insbesondere Transglutaminase, zugesetzt wurde.

13. Verfahren nach mindestens einem der Ansprüche 1 bis 10, **dadurch gekennzeichnet, dass** die Menge an zugeführtem Haftmittel (23) in Abhängigkeit des Durchmessers der extrudierten pastösen Masse (22) eingestellt wird.

14. Verfahren nach mindestens einem der Ansprüche 1 bis 10, **dadurch gekennzeichnet, dass** die Viskosität des verwendeten Haftmittels < 20 mPas aufweist.

## Claims

1. Method for producing a foodstuff (100), in particular sausages, produced by coextrusion, the method comprising the steps of:
- extruding a paste mass (22),
- coextruding a casing (20),
feeding a bonding agent (23) between paste mass and coextruded casing (20), **characterized in that** the casing (20) is extruded onto a filling tube (2) and moved a distance towards the end of the filling tube, wherein the bonding agent (23) is introduced as sliding agent between the casing and the filling tube (2) and the paste mass (22) is ejected through the filling tube (2) into the casing.

2. Method according to claim 1, **characterized in that** the bonding agent (23) is liquid.

3. Method according to at least one of claims 1 to 2, **characterized in that** the bonding agent (23) includes water, in particular distilled water.

4. Method according to at least one of claims 1 to 3, **characterized in that** the bonding agent (23), the casing (20) and the paste mass (22) each include at least one protein (21).

5. Method according to at least one of claims 1 to 4, **characterized in that** the bonding agent (23) is a protein-containing liquid and the protein concentration is preferably in a range of 3 to 30 % by weight, in particular 5 to 20 % by weight.

6. Method according to at least claim 4, **characterized in that** the coextruded foodstuff (100) is subjected to a thermal treatment.

7. Method according to at least one of claims 1 to 6, **characterized in that** the bonding agent (23) includes at least one enzyme (24), in particular transglutaminase.

8. Method according to at least one of claims 1 to 6, **characterized in that** the casing (20) includes at least one hydrocolloid, in particular at least one polysaccharide.

9. Method according to claim 8, **characterized in that** the bonding agent (23) equally includes at least one hydrocolloid, in particular at least one polysaccharide, in particular in a concentration of 0.2 to 5 % by weight.

10. Method according to at least one of claims 1 to 9, **characterized in that** the cross-sectional ring area (23) of the bonding agent amounts to 0.1 % to 2 %, in particular 0.5 % to 1.5 % of the cross-sectional area of the ejected paste mass.

11. Use of a bonding agent for the production of a foodstuff produced by coextrusion, wherein a paste mass is ejected, a casing is coextruded, and bonding agent is fed between paste mass and coextruded casing, **characterized in that**
the paste mass is ejected from a filling tube and the casing is extruded onto the filling tube and moved a distance towards the end of the filling tube, and **in that**
the bonding agent is used as sliding agent.

12. Use of a bonding agent according to claim 11, **characterized in that** the bonding agent includes water, in particular distilled water, as main component to which either
- at least one protein
and/or
- at least one hydrocolloid, in particular at least one polysaccharide,
and/or
- at least one enzyme, in particular transglutaminase,
was added.

13. Method according to at least one of claims 1 to 10, **characterized in that** the amount of fed bonding agent (23) is adjusted depending on the diameter of the extruded paste mass (22).

14. Method according to at least one of claims 1 to 10, **characterized in that** the viscosity of the bonding agent used is < 20 mPas.

## Revendications

1. Procédé de fabrication d'un aliment produit par coextrusion (100), en particulier de saucisses, comprenant les étapes suivantes :
- extrusion d'une masse pâteuse (22),
- coextrusion d'une enveloppe (20),
- alimentation d'un agent adhésif (23) entre la masse pâteuse et l'enveloppe coextrudée (20), **caractérisé en ce que** l'enveloppe (20) est extrudée sur un tube de remplissage (2) et est déplacée sur une certaine distance en direction de l'extrémité du tube de remplissage, dans lequel l'agent adhésif (23) est introduit comme lubrifiant entre l'enveloppe et le tube de remplissage (2), et la masse pâteuse (22) est expulsée par le tube de remplissage (2) dans l'enveloppe.

2. Procédé selon la revendication 1, **caractérisé en ce que** l'agent adhésif (23) est liquide.

3. Procédé selon au moins l'une des revendications 1 à 2, **caractérisé en ce que** l'agent adhésif (23) comporte de l'eau, et en particulier de l'eau distillée.

4. Procédé selon au moins l'une des revendications 1 à 3, **caractérisé en ce que** l'agent adhésif (23), l'enveloppe (20) et la masse pâteuse (22) comportent respectivement au moins une protéine (21).

5. Procédé selon au moins l'une des revendications 1 à 4, **caractérisé en ce que** l'agent adhésif (23) est un liquide contenant des protéines et la concentration en protéines est préférablement comprise dans une plage de 3 % à 30 % en masse, et en particulier de 5 % à 20 % en masse.

6. Procédé selon au moins une revendication 4, **caractérisé en ce que** l'aliment coextrudé (100) est traité thermiquement.

7. Procédé selon au moins l'une des revendications 1 à 6, **caractérisé en ce que** l'agent adhésif (23) comporte au moins une enzyme (24), en en particulier de la transglutaminase.

8. Procédé selon au moins l'une des revendications 1 à 6, **caractérisé en ce que** l'enveloppe (20) comporte au moins un hydrocolloïde, et en particulier au moins un polysaccharide.

9. Procédé selon la revendication 8, **caractérisé en ce que** l'agent adhésif (23) comporte également au moins un hydrocolloïde, et en particulier au moins un polysaccharide, en particulier selon une concentration de 0,2 % à 5 % en masse.

10. Procédé selon au moins l'une des revendications 1 à 9, **caractérisé en ce que** la surface transversale annulaire (23) de l'agent adhésif est de 0,1 % à 2 %, et en particulier de 0,5 % à 1,5 % de la surface transversale de la masse pâteuse expulsée.

11. Utilisation d'un agent adhésif pour la fabrication d'un aliment produit par coextrusion, dans laquelle une masse pâteuse est expulsée, une enveloppe est coextrudée, et l'agent adhésif est alimenté entre la masse pâteuse et l'enveloppe coextrudée, **caractérisée en ce que** la masse pâteuse est expulsée d'un tube de remplissage et l'enveloppe est extrudée sur le tube de remplissage et déplacée sur une certaine distance en direction de l'extrémité du tube de remplissage, et **en ce que** l'agent adhésif est utilisé comme agent lubrifiant.

12. Utilisation d'un agent adhésif selon la revendication 11, **caractérisée en ce que** l'agent adhésif comporte comme composant principal de l'eau, et en particulier de l'eau distillée, à laquelle est ajouté
- au moins une protéine,
et/ou
- au moins un hydrocolloïde, en particulier au moins un polysaccharide,
et/ou
- au moins une enzyme, en particulier une transglutaminase.

13. Procédé selon au moins l'une des revendications 1 à 10, **caractérisé en ce que** la quantité d'agent adhésif ajoutée (23) est réglée en fonction du diamètre de la masse pâteuse (22) extrudée.

14. Procédé selon au moins l'une des revendications 1 à 10, **caractérisé en ce que** la viscosité de l'agent adhésif utilisé est < 20 mPa.s.
